# EUROPEAN PATENT APPLICATION

(11) **EP 2 615 858 A2**
(43) Date of publication of application: **17.07.2013**
(21) Application number: 11828127.8
(22) Date of filing: 28.09.2011
(51) Int. Cl.: H04W 4/10

(54) **METHOD FOR PAGING USER TERMINAL IN CELL_PCH STATE AND DEVICE THEREFOR**

(30) Priority: 30.09.2010 CN 201010506132
(71) Applicant: Huawei Technologies Co., Ltd., Shenzhen, Guangdong 518129 (CN)
(72) Inventor: GUO, Xuanyu, Shenzhen Guangdong 518129 (CN); XU, Xiaoying, Shenzhen Guangdong 518129 (CN); LIU, Qi, Shenzhen Guangdong 518129 (CN); ZHENG, Xiaoxiao, Shenzhen Guangdong 518129 (CN); CHEN, Yanyan, Shenzhen Guangdong 518129 (CN)
(74) Representative: Thun, Clemens
(86) International application number: PCT/CN2011/080295
(87) International publication number: WO 2012/041231

(57) **Abstract**

Embodiments of the present invention disclose a method and an apparatus for paging a user equipment in a Cell_PCH state, and relate to the field of communication technologies, so that when a UE in a Cell_PCH state is paged by a network, congestion of HS-SCCH resources is reduced and an access delay of the UE is decreased. The apparatus includes: an RNC, configured to instruct a NodeB to send data to a user equipment via an HS-PDSCH, where the user equipment is in a Cell_PCH state and has a dedicated H-RNTI; and a user equipment, configured to: when detecting that a specified number of HS-SCCH sub-frames do not carry a dedicated H-RNTI of the user equipment, blindly detect HS-PDSCH, or monitor HS-SCCHs and receive HS-PDSCHs concurrently, that is, receive data by using a Less and a non-Less manner concurrently. The embodiments of the present invention are mainly applied in a process where a network assigns physical channel resources to a user equipment dynamically.

## Description

This application claims priority to Chinese Patent Application No. 201010506132.3, filed with the Chinese Patent Office on September 30, 2010, and entitled "METHOD AND APPARATUS FOR PAGING USER EQUIPMENT IN CELL_PCH STATE", which is incorporated herein by reference in its entirety.

### TECHNICAL FIELD

The present invention relates to the field of communication technologies, and in particular, to a method and an apparatus for paging a user equipment in a Cell_PCH STATE.

### BACKGROUND

Currently, when a UE (user equipment, User Equipment) uses push-to-talk (PTT) services, the UE can implement transmission of PTT service data only in a cell paging channel (Cell_PCH) state. When a UE is in a Cell_PCH state is paged by a network, the prior art usually uses the following processing manner:

If a UTRAN (UMTS Terrestrial Radio Access Network, UMTS terrestrial radio access network) configures a dedicated H-RNTI (HS-DSCH Radio Network Temporary Identity radio network temporary identity) for a UE in a Cell_PCH state, the dedicated H-RNTI is stored in an RNC (Radio Network Controller, radio network controller) and the UE.

On the network, when the RNC pages, by using a PAGING TYPE2 (paging type 2 message ), the UE in the Cell_PCH state via a DCCH (DCCH (Dedicated Control Channel, dedicated control channel)/a DTCH (Dedicated Traffic Channel, dedicated traffic channel), the RNC firstly sends an HS-DSCH Data Frame Type3 FP frame carrying the H-RNTI to a NodeB (base station); after obtaining the H-RNTI, the NodeB assigns and sends an HS-SCCH (High Speed Shared Control Channel, high speed shared control channel) and a corresponding HS-PDSCH (High Speed Physical Downlink Shared Channel, high speed physical downlink shared channel) to the UE corresponding to the H-RNTI, and carries the dedicated H-RNTI of the UE via the HS-SCCH, and sends data to the UE via the HS-PDSCH respectively. When the UE switches to a cell forward access channel (Cell_FACH) state, the RNC sends data to the UE via the DCCH/DTCH, and sends an HS-DSCH Data Frame Type2 FP frame carrying an H-RNTI to the NodeB; and after obtaining the H-RNTI, the NodeB assigns and sends the HS-SCCH (High Speed Shared Control Channel, high speed shared control channel) and the corresponding HS-PDSCH (High Speed Physical Downlink Shared Channel, high speed physical downlink shared channel) to the UE corresponding to the H-RNTI, carries the dedicated H-RNTI of the UE via the HS-SCCH, and sends data to the UE via the HS-PDSCH respectively.

On the UE, after the UE in the Cell_PCH state obtains a paging instruction carried in a PICH (Paging Indicator Channel, paging indicator channel), the UE detects five HS-SCCH sub-frames in a paging timeslot within a DRX (Discontinuous Transmission, discontinuous reception) period; if the UE detects a dedicated H-RNTI of the UE in an HS-SCCH, the UE receives data in an HS-PDSCH corresponding to the HS-SCCH. If the UE in the Cell_PCH state fails to detect information of the dedicated H-RNTI of the UE after detecting five HS-SCCH sub-frames in the paging timeslot within a DRX period, the UE enters a dormant state.

However, when the number of UEs using PTT services increases greatly, the number of UEs in the Cell_PCH state also increases. If the UEs in the Cell_PCH state have a dedicated H-RNTI, when the RNC pages a UE in the Cell_PCH state via the DCCH/DTCH, a large quantity of HS-SCCH resources are occupied, which affects the UE in the Cell_DCH state in receiving data. However, generally, because HS-SCCH resources in a cell are limited, congestion of HS-SCCH resources may occur, which affects user experience.

### SUMMARY

Embodiments of the present invention provide a method and an apparatus for paging a user equipment in a Cell_PCH state, so that when a UE in a Cell_PCH state is paged by a network, congestion of HS-SCCH resources is reduced and an access delay of the UE is decreased.

To achieve the foregoing objective, embodiments of the present invention use the following technical solutions.

In one aspect, a method for paging a user equipment in a Cell_PCH state is disclosed. The method is implemented on a network, including: instructing, by an RNC, a NodeB to send data to a user equipment via an HS-PDSCH, where the user equipment is in a Cell_PCH state and stores a dedicated H-RNTI.

In another aspect, a method for paging a user equipment in a Cell_PCH state is disclosed, including: receiving a first instruction message from an RNC, and sending data to a user equipment via a high speed physical downlink shared channel HS-PDSCH according to the first instruction message, where the user equipment is in a Cell_PCH state and has a dedicated radio network temporary identity (H-RNTI).

In another aspect, a method for paging a user equipment in a Cell_PCH state is disclosed. The method is implemented on a terminal, including: receiving, by a user equipment, a PICH carrying a paging instruction from an RNC; detecting, by the user equipment, according to the paging instruction, whether a specified number of HS-SCCH sub-frames related to the PICH carry a dedicated H-RNTI of the user equipment; if detecting that the specified number of HS-SCCH sub-frames do not carry the dedicated H-RNTI of the user equipment, blindly detecting, by the user equipment, HS-PDSCHs; if detecting that an HS-SCCH sub-frame in subsequent HS-SCCH sub-frame(s) of the specified number of HS-SCCH sub-frames carries the dedicated H-RNTI, receiving, by the user equipment, data from an HS-PDSCH corresponding to the HS-SCCH sub-frame carrying the dedicated H-RNTI.

A paging device includes: a paging unit, configured to instruct a NodeB to send data to the user equipment via an HS-PDSCH, where the user equipment is in a Cell_PCH state and has a dedicated H-RNTI.

A base station includes: a first receiving unit, configured to receive a first instruction message from an RNC; and a first sending unit, configured to send, according to the first instruction message, data to the user equipment via a high speed physical downlink shared channel HS-PDSCH, where the user equipment is in a Cell_PCH state and has a dedicated radio network temporary identity (H-RNTI).

A user equipment corresponding to the foregoing paging device and having a dedicated H-RNTI includes: a receiving unit, configured to receive a PICH carrying a paging instruction from an RNC; a detecting unit, configured to detect, according to the paging instruction, whether a specified number of HS-SCCH sub-frames related to the PICH carry a dedicated H-RNTI of the user equipment in a paging timeslot within a DRX period; a first processing unit, configured to blindly detect HS-PDSCH if the detecting unit detects that the specified number of HS-SCCH sub-frames do not carry a dedicated H-RNTI of the user equipment; and a second processing unit, configured to receive data from an HS-PDSCH corresponding to the HS-SCCH carrying a dedicated H-RNTI of the user equipment if the detecting unit detects that an HS-SCCH sub-frame in subsequent HS-SCCH sub-frame(s) of the specified number of HS-SCCH sub-frames carries a dedicated H-RNTI of the user equipment.

In one aspect, a method for paging a user equipment in a Cell_PCH state is disclosed. The method is implemented on a network, including: sending, by an RNC, an H-RNTI and an extension identity of a user equipment to a NodeB; sending, by the RNC, instruction information to the user equipment to instruct the user equipment having the extension identity to continuously detect a specific number of added HS-SCCH sub-frames if the user equipment fails to detect an HS-SCCH sub-frame carrying the H-RNTI of the user equipment after detecting a specified number of HS-SCCH sub-frames in a paging timeslot within a DRX period.

In another aspect, a method for paging a user equipment in a Cell_PCH state is disclosed, including: receiving an H-RNTI and an extension identity of a user equipment from an RNC, assigning an HS-SCCH and a corresponding HS-PDSCH to the user equipment, and sending data to the user equipment via the HS-PDSCH corresponding to the HS-SCCH, where the HS-SCCH carries the H-RNTI of the user equipment; and setting a specific field of a PICH frame to a specified value according to an instruction of the RNC, where the specified value indicates that a specific number of added HS-SCCH sub-frames are continuously detected, and sending the PICH to the user equipment.

In another aspect, a method for paging a user equipment in a Cell_PCH state is disclosed. The method is implemented on a terminal, including: receiving, by a user equipment, an instruction message from an RNC; continuously detecting, by the user equipment, a specific number of added HS-SCCH sub-frames if the user equipment fails to detect an HS-SCCH sub-frame carrying an H-RNTI of the user equipment after detecting, according to the instruction message, a specified number of HS-SCCH sub-frames in a paging timeslot within a DRX period.

Another paging device includes: a first sending unit, configured to send an H-RNTI and an extension identity of a user equipment to a NodeB; and a second sending unit, configured to send instruction information to the user equipment to instruct the user equipment having the extension identity to continuously detect a specific number of added HS-SCCH sub-frames if the user equipment fails to detect an HS-SCCH carrying the H-RNTI of the user equipment after detecting a specified number of HS-SCCH sub-frames in a paging timeslot within a DRX period.

Another NodeB includes: a receiving unit, configured to: receive an H-RNTI and an extension identity of a user equipment from an RNC, assign an HS-SCCH and a corresponding HS-PDSCH to the user equipment, and send data to the user equipment via the HS-PDSCH corresponding to the HS-SCCH, where the HS-SCCH carries the H-RNTI of the user equipment; and a processing unit, configured to set a specific field of a PICH frame to a specified value according to an instruction of the RNC, where the specified value indicates that a specific number of added HS-SCCH sub-frames are continuously detected, and send the PICH to the user equipment.

Another user equipment corresponding to the another paging device and having a dedicated H-RNTI includes: a receiving unit, configured to receive an instruction message from an RNC; and a detecting unit, configured to continuously detect a specific number of added HS-SCCHs if detecting no HS-SCCH carrying its own H-RNTI after detecting a specified number of HS-SCCHs according to the instruction message in a paging timeslot within a DRX period.

In the embodiments of the present invention that are described in the foregoing technical solutions, when a user equipment has an H-RNTI, a manner for implementing paging the user equipment having the H-RNTI is as follows: When a number of HS-SCCH resources demanded by a user equipment in a current cell is greater than a preset threshold, an RNC instructs a NodeB not to assign an HS-SCCH to a user equipment having an H-RNTI when receiving a PAGING TYPE 1 message from the RNC, but to send data to user equipments directly via an HS-PDSCH; and at this time, in a case that the user equipment fails to detect the H-RNTI in the HS-SCCHs, the user equipment monitors all HS-PDSCHs by using a blind detection manner to obtain data. Compared with the prior art where an RNC sends a PAGING TYPE 2 message to a NodeB to trigger the NodeB to assign an HS-SCCH and a corresponding HS-PDSCH to a user equipment having an H-RNTI, a number of HS-SCCH resources assigned to a user equipment having an H-RNTI in a CELL_PCH state can be reduced while data is sent to the user equipment, thereby reducing congestion of HS-SCCH resources.

Another manner of paging the user equipment having the H-RNTI is as follows: An RNC sends an H-RNTI and an extension identity of a user equipment to a NodeB; the RNC sends an instruction message to the user equipment to instruct the user equipment to continuously detect a specific number of added HS-SCCHs if the user equipment fails to detect an HS-SCCH carrying the H-RNTI of the user equipment after detecting a specified number of HS-SCCHs in a paging timeslot within a DRX period. However, in the prior art, after a user equipment finishes detecting a specified number of HS-SCCHs in a paging timeslot within a DRX period, if the user equipment fails to detect an HS-SCCH carrying an H-RNTI of the user equipment the user equipment enters a dormant state and fails to receive data in a paging timeslot within a current DRX period. Compared with the prior art, the embodiments of the present invention can increase the probability of receiving data by a user equipment in a paging timeslot within a DRX period, reduce the time of occupying HS-SCCHs by the user equipment, and improve the utilization of HS-SCCHs, thereby achieving the objective of reducing congestion of HS-SCCH resources.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.
FIG. 1 is a flowchart of a method for paging a user equipment in a Cell_PCH state according to an embodiment of the present invention;
FIG. 2 is a flowchart of another method for paging a user equipment in a Cell_PCH state according to an embodiment of the present invention;
FIG. 3 is a flowchart of still another method for paging a user equipment in a Cell_PCH state according to an embodiment of the present invention;
FIG. 4 is a flowchart of still another method for paging a user equipment in a Cell_PCH state according to an embodiment of the present invention;
FIG. 5 is a flowchart of still another method for paging a user equipment in a Cell_PCH state according to an embodiment of the present invention;
FIG. 6 is a flowchart of still another method for paging a user equipment in a Cell_PCH state according to an embodiment of the present invention;
FIG. 7 is a structural diagram of a paging device according to an embodiment of the present invention;
FIG. 8 is a structural diagram of a NodeB according to an embodiment of the present invention;
FIG. 9 is a structural diagram of a user equipment according to an embodiment of the present invention;
FIG. 10 is a structural diagram of another paging device according to an embodiment of the present invention;
FIG. 11 is a structural diagram of another NodeB according to an embodiment of the present invention; and
FIG. 12 is a structural diagram of another user equipment according to an embodiment of the present invention.

### DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

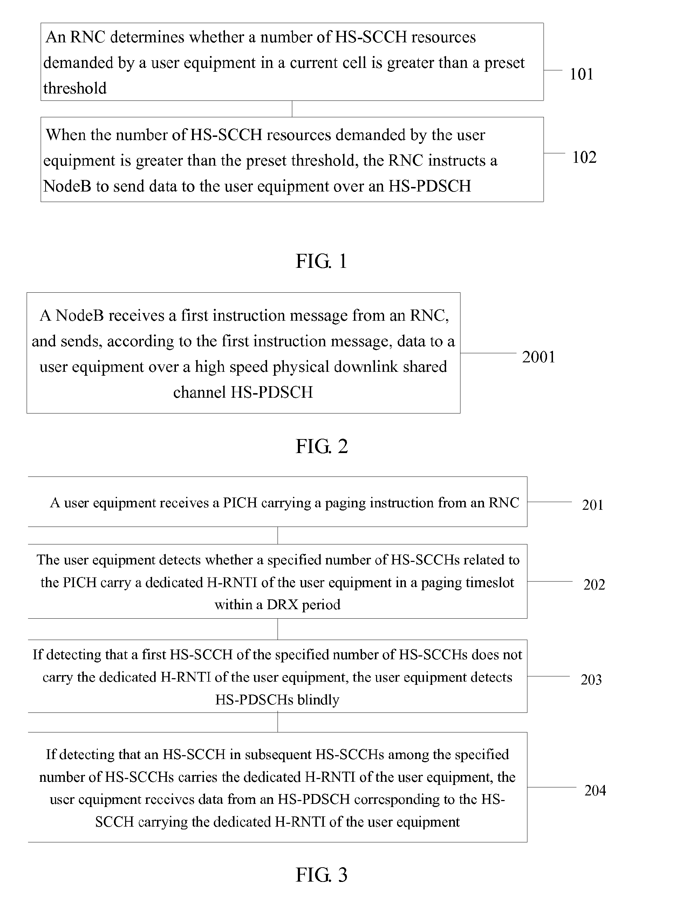

An embodiment illustrated in FIG. 1 provides a method for paging a user equipment in a Cell_PCH state. The method is implemented on a network. An RNC instructs a NodeB to send, directly via an HS-PDSCH, data to a user equipment by using an HS-SCCH less operationoperation manner, where the user equipment is in a Cell_PCH state and has a dedicated H-RNTI. In actual applications, the following steps may be specifically used.
101. An RNC determines whether a number of HS-SCCH resources demanded by a user equipment in a current cell is greater than a preset threshold.
102. When a number of HS-SCCH resources demanded by the user equipment is greater than the preset threshold, the RNC instructs a NodeB to send, directly via an HS-PDSCH, data to the user equipment by using an HS-SCCH less operationoperation manner, where the user equipment is in a Cell_PCH state and has a dedicated H-RNTI.

For example, when a number of pagings is relatively large or a number of HS-SCCH resources is relatively small in a current cell, a number of HS-SCCH resources demanded by the user equipment is greater than the preset threshold.

In the embodiment of the present invention, when the user equipment is in the Cell_PCH state and has the dedicated H-RNTI, if a number of HS-SCCH resources demanded by the user equipment in the current cell is greater than the preset threshold, the RNC instructs the NodeB not to assign HS-SCCH resources to the user equipment having the H-RNTI, but to send a PAGING TYPE 1 message to the user equipment directly via the HS-PDSCH. Compared with the prior art where an RNC sends a PAGING TYPE 2 message to a NodeB to trigger the NodeB to assign an HS-SCCH and a corresponding HS-PDSCH to a user equipment having an H-RNTI, the number of HS-SCCHs assigned to the user equipment having the H-RNTI can be reduced, thereby reducing congestion of HS-SCCH resources.

It should be noted that, the user equipment provided in the embodiment of the present invention is in the Cell_PCH state and has the dedicated H-RNTI. In the embodiment of the present invention, the foregoing process where the NodeB does not assign the HS-SCCH to the user equipment having the H-RNTI but sends data to the user equipment directly via the HS-PDSCH is as follows: The NodeB sends data to the user equipment by using an HS-SCCH less operation manner.

The process where the NodeB assigns the HS-SCCH and the HS-PDSCH to the user equipment having the H-RNTI and sends data to the user equipment via the HS-PDSCH corresponding to the HS-SCCH is as follows: The NodeB sends data to the user equipment by using a non-less manner.

Accordingly, an embodiment of the present invention that is illustrated in FIG. 2 also provides a method for paging a user equipment in a Cell_PCH state. The method is implemented on a Node B (NodeB).
2001. A NodeB receives a first instruction message from an RNC, and sends, according to the first instruction message, data to a user equipment via a high speed physical downlink shared channel HS-PDSCH, where the user equipment is in a Cell_PCH state and has a dedicated radio network temporary identity H-RNTI.

Furthermore, when the RNC sends at least two data packets, the NodeB receives the at least two data packets and an H-RNTI of a user equipment to which the at least two data packets belong, from the RNC, in a first System Frame Number (SFN), sends, according to a specific instruction from the RNC, a first data packet of the at least two data packets to the user equipment corresponding to the H-RNTI via the HS-PDSCH, in a next SFN, caches subsequent data packet(s) of the at least two data packets and the H-RNTI, assigns an HS-SCCH and a corresponding HS-PDSCH to the user equipment, and sends the subsequent data packet(s) of the at least two data packets via the HS-PDSCH corresponding to the HS-SCCH.

Specifically, when the NodeB receives the at least two data packets and the H-RNTI of the user equipment to which the at least two data packets belong from the RNC, a possible implementation process is as follows: Firstly, a first data packet of the at least two data packets may be sent, and then the H-RNTI is sent while the subsequent data packet(s) of the at least two data packets are sent.

In addition, the NodeB sets a specific field of a PICH frame to a specified value according to a second instruction received from the RNC, and sends the PICCH to the user equipment, where the specified value is used to instruct the user equipment to blindly detect HS-PDSCH if a specified number of HS-SCCHs do not carry the dedicated H-RNTI of the user equipment.

Accordingly, an embodiment illustrated in FIG. 3 provides a method for paging a user equipment in a Cell_PCH state. The method is implemented on a user equipment and is specifically performed by the user equipment.
201. A user equipment receives a PICH carrying a paging instruction from an RNC.
202. The user equipment detects, according to the paging instruction, whether a specified number of HS-SCCH sub-frames related to the PICH carry a dedicated H-RNTI of the user equipment in a paging timeslot within a DRX period.
   Specifically, the user equipment may detect, according to the paging instruction, whether five HS-SCCH sub-frames related to the PICH carry the dedicated H-RNTI of the user equipment in the paging timeslot within a DRX period.
203. If detecting that the specified number of HS-SCCHs do not carry the dedicated H-RNTI of the user equipment, the user equipment receives all HS-PDSCHs.
   In the embodiment of the present invention, a NodeB sends data by using an HS-SCCH less operation manner. However, in the prior art, when a user equipment fails to detect that an HS-SCCH has a dedicated H-RNTI of the user equipment, the user equipment enters a dormant state, so that the user equipment fails to receive data in HS-PDSCHs. To avoid the occurrence of this case, in the embodiment of the present invention, when detecting that no sub-frame has the dedicated H-RNTI of the user equipment, the user equipment receives all HS-PDSCHs, so that the user equipment can receive data from the HS-PDSCHs sent from the network to the user equipment.
204. If detecting that an HS-SCCH sub-frame in subsequent HS-SCCH sub-frame(s) of the specified number of HS-SCCH sub-frames carries the dedicated H-RNTI of the user equipment, the user equipment receives data from an HS-PDSCH corresponding to the HS-SCCH carrying the dedicated H-RNTI of the user equipment.

For example, if detecting that an HS-SCCH sub-frame in subsequent HS-SCCH sub-frame(s) of the five HS-SCCH sub-frames carries the dedicated H-RNTI of the user equipment, the user equipment receives data from an HS-PDSCH corresponding to the HS-SCCH carrying the dedicated H-RNTI of the user equipment.

When a user equipment has a dedicated H-RNTI, an RNC in the prior art instructs a NodeB to assign an HS-SCCH and a corresponding HS-PDSCH to the user equipment having the H-RNTI; accordingly, a user equipment in the prior art detects whether a specified number of HS-SCCH sub-frames related to the PICH carry a dedicated H-RNTI of the user equipment in a paging timeslot within a DRX period; and if failing to detect an HS-SCCH channel carrying the H-RNTI of the user equipment, the user equipment enters a dormant state and cannot detect the HS-SCCHs again until a paging timeslot within a next DRX period reaches.

However, if the user equipment provided in the embodiment of the present invention fails to detect an HS-SCCH carrying the H-RNTI of the user equipment in a paging timeslot within a DRX period, the user equipment receives data by using an HS-SCCH less manner. In specific applications, the RNC may instruct, by using the following three manners, the user equipment whether to receive data by using an HS-SCCH less manner.
Manner 1: A PI of a PICH may be set to instruct the user equipment whether data needs to be received by using the HS-SCCH less manner. For example, if read first 288 bits of the PICH instructs the user equipment not to read HS-SCCHs (the PI corresponding to the UE is 0), the user equipment does not need to read the last 12 bits of the PICH; if reading the first 288 bits and the user equipment is instructed to read HS-SCCHs (the PI corresponding to the UE is 1), the UE needs to continuously read one bit or two bits after the 288 bits, for example, the 289th bit is 1, and receives data by using the HS-SCCH less manner.
Manner 2: The RNC sends a system broadcast message carrying a first parameter to the user equipment, where the first parameter is used to instruct the user equipment to receive data by using the HS-SCCH less manner if the user equipment fails to detect an HS-SCCH carrying the H-RNTI of the user equipment.
Manner 3: The RNC sends an radio resource control (RRC) message carrying a second parameter to the user equipment, where the second parameter is used to instruct the user equipment to receive data by using the HS-SCCH less manner if the user equipment fails to detect an HS-SCCH carrying the H-RNTI of the user equipment.

However, the RNC provided in the embodiment of the present invention triggers the NodeB not to assign an HS-SCCH to the user equipment having the H-RNTI, but to send data to user equipments directly via the HS-PDSCH, which can reduce a number of HS-SCCH resources assigned to the user equipment having the H-RNTI and reduce congestion of HS-SCCH resources. Accordingly, the user equipment provided in the embodiment of the present invention can monitor, by blind detection, all HS-PDSCHs to obtain data when failing to detect the H-RNTI in the HS-SCCHs, so as to obtain data received directly via an HS-PDSCH when the NodeB does not assign the HS-SCCH.

Furthermore, in the foregoing embodiments of the present invention that are illustrated in FIG. 1, FIG. 2, and FIG. 3, in the same SFN (System Frame Number, system frame number), if the RNC sends at least two data packets to the user equipment, to avoid that after receiving a first data packet, the user equipment fails to receive subsequent data packet(s) sent by using the HS-SCCH less operation manner due to the switch from a Cell_PCH state to a Cell_FACH state, the following two manners may be used to perform processing.

### Manner 1:

The RNC instructs the NodeB to send, according to the HS-SCCH less manner, a first Paging type 1 data frame of at least two data frames to the user equipment directly via the HS-PDSCH; the RNC sends the data frame to the NodeB according to an FP3 manner where the H-RNTI is not carried; after the RNC receives a measurement report from the user equipment, the RNC sends subsequent data frames to the NodeB by using an FP2 manner where the H-RNTI is carried, and instructs the NodeB to send subsequent data packet(s) in a next SFN or send subsequent data packet(s) in the same SFN after the first data packet is sent completely, assign an HS-SCCH and a corresponding HS-PDSCH to the user equipment, and send subsequent data packet(s) of the at least two data packets via the HS-PDSCH corresponding to the HS-SCCH, so that the user equipment in the Cell_FACH state can detect the HS-SCCH and the corresponding HS-PDSCH.

### Manner 2:

Before receiving a measurement report, the RNC sends at least two data packets and an H-RNTI of a user equipment to which the at least two data packets belong to the user equipment. The RNC instructs the NodeB to receive the at least two data packets and the H-RNTI of the user equipment to which the at least two data packets belong from the RNC; the RNC sends a first data packet to the NodeB by carrying the H-RNTI in FP3 manner, and sends a first DTCH data packet or a DCCH paging packet of the at least two data packets to the user equipment corresponding to the H-RNTI; the RNC sends subsequent data packet(s) to the NodeB in FP2 manner, and instructs the NodeB to cache subsequent data packet(s) of the at least two data packets, send subsequent data packet(s) in a second SFN or send subsequent data packet(s) in the same SFN after the first data packet is sent completely, assign an HS-SCCH and a corresponding HS-PDSCH to the user equipment, and send subsequent data packet(s) of the at least two data packets via the HS-PDSCH corresponding to the HS-SCCH, that is, send subsequent data packet(s) of the at least two data packets to user equipments according to a manner of the UE in the Cell_FACH state, so that the user equipment in the Cell_FACH state can detect the HS-PDSCH corresponding to the HS-SCCH.

The first packet being sent completely refers to that the NodeB completes sending a certain number of sub-frames by using the HS-SCCH less manner of the PCCH that is allowed in a system broadcast message.

It should be noted that, in actual applications, related information may also be pre-configured on the NodeB, so that the NodeB can send data by using the second manner. As a supplementary illustration, if a data packet received by the NodeB needs to sent by segments, the NodeB sends a second segment to the UE in a next SFN by using the HS-SCCH manner.

In addition, the RNC can solve this problem by controlling the time of delivering data. After sending data or a paging to the UE, the RNC stops delivering a data packet to the UE before receiving a measurement report from the UE.

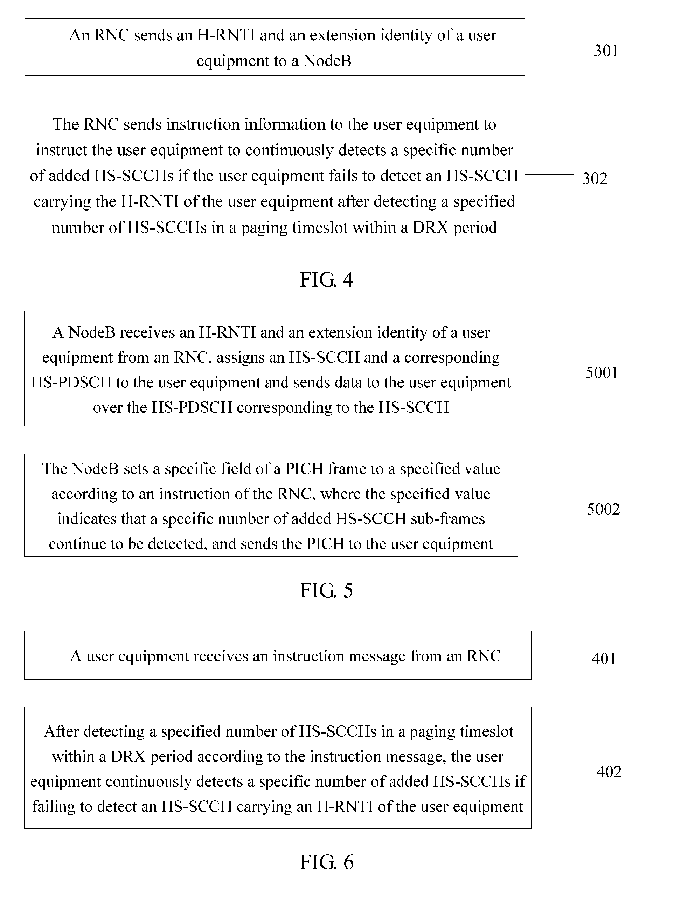

An embodiment illustrated in FIG. 4 provides a method for paging a user equipment in a Cell_PCH state. The method is implemented on a network and is specifically performed by an RNC.
301. An RNC sends an H-RNTI and an extension identity of a user equipment to a NodeB, and instructs the NodeB to assign an HS-SCCH and a corresponding HS-PDSCH to the user equipment and send data to the user equipment via the HS-PDSCH corresponding to the HS-SCCH, where the HS-SCCH carries the H-RNTI of the user equipment.
   It should be noted that, while this step is executed, the NodeB receives a PAGING TYPE 2 message from the RNC.
302. The RNC sends instruction information to the user equipment to instruct the user equipment having the extension identity to continuously detect a specific number of added HS-SCCHs if the user equipment fails to detect an HS-SCCH carrying the H-RNTI of the user equipment after detecting a specified number of HS-SCCHs in a paging timeslot within a DRX period.

The extension identity is used to indicate that the user equipment is capable of reading HS-SCCHs extensively, that is, after detecting a specified number of HS-SCCHs in a paging timeslot within a DRX period, if failing to detect an HS-SCCH carrying the H-RNTI of the user equipment, the user equipment continuously detects a specific number of added HS-SCCHs.

Accordingly, an embodiment illustrated in FIG. 5 provides a method for paging a user equipment in a Cell_PCH state. The method is implemented on a mobile NodeB.
5001. A NodeB receives an H-RNTI and an extension identity of a user equipment from an RNC, assigns an HS-SCCH and a corresponding HS-PDSCH to the user equipment and sends data to the user equipment via the HS-PDSCH corresponding to the HS-SCCH, where the HS-SCCH carries the H-RNTI of the user equipment.
5002. The NodeB sets a specific field of a PICH frame to a specified value according to an instruction of the RNC, where the specified value indicates that a specific number of added HS-SCCH sub-frames are continuously detected, and sends the PICH to the user equipment.

Accordingly, an embodiment illustrated in FIG. 6 provides a method for paging a user equipment in a Cell_PCH state. The method is implemented on a user equipment and is specifically performed by the user equipment.
401. A user equipment receives an instruction message from an RNC.
402. After detecting a specified number of HS-SCCHs in a paging timeslot within a DRX period according to the instruction message, the user equipment continuously detects a specific number of added HS-SCCHs if failing to detect an HS-SCCH carrying an H-RNTI of the user equipment.

In the foregoing embodiments illustrated in FIG. 4, FIG. 5, and FIG. 6, an RNC sends a PAGING TYPE 2 message to a NodeB, and sends an H-RNTI and an extension identity of a user equipment to the NodeB, and sends an instruction message to the user equipment having the extension identity to instruct the user equipment to continuously detect a specific number of added HS-SCCHs if the user equipment fails to detect an HS-SCCH carrying the H-RNTI of the user equipment after detecting a specified number of HS-SCCHs in a paging timeslot within a DRX period. However, in the prior art, after a user equipment finishes detecting a specified number of HS-SCCHs in a paging timeslot within a DRX period, the if the user equipment fails to detect an HS-SCCH carrying an H-RNTI of the user equipment, the user equipment enters a dormant state and fails to receive data in the paging timeslot within a current DRX period. Compared with the prior art, the embodiments of the present invention can increase the probability of a user equipment in receiving data in a paging timeslot within a DRX period, reduce the time of occupying HS-SCCHs by the user equipment, and improve the utilization of HS-SCCHs, thereby achieving the obj ective of reducing congestion of HS-SCCH resources.

In actual applications, the RNC may send the instruction message to the user equipment having the extension identity by specifically using the following three implementation manners.
Manner A: The RNC instructs the NodeB to set the specific field of the PICH frame to the specified value, and instructs the NodeB to send the PICH to the user equipment having the extension identity, where the specific field is used to instruct the user equipment to continuously detect the specific number of added HS-SCCH sub-frames if the user equipment fails to detect an HS-SCCH carrying the H-RNTI of the user equipment after detecting the specified number of HS-SCCH sub-frames in the paging timeslot within a DRX period.
   For example, the NodeB may use one bit or two bits in the last 12 bits of 300 bits in the PICH frame to identify whether the user equipment is required to monitor five or ten more HS-SCCH sub-frames. The user equipment in the prior art monitors only five HS-SCCH sub-frames in a paging timeslot within a DRX period, while the user equipment in the embodiments of the present invention can continuously monitor a specified number of HS-SCCH sub-frames after monitoring five HS-SCCH sub-frames. Therefore, if the NodeB requires the user equipment to monitor HS-SCCHs in another 15 sub-frames, the NodeB can set the 289th bit and the 290th bit in the PICH to 11. To avoid that the user equipment misses detecting these two bits, the NodeB may also send the two bits repeatedly, that is, the 291 st bit and the 291 st bit are still 11.
   When the NodeB assigns HS-SCCHs by using the manner, because user equipment in the prior art monitors only five HS-SCCH sub-frames in a paging timeslot within a DRX period, the NodeB preferentially assigns HS-SCCH resources in the first five sub-frames to the user equipment in the prior art.
   However, the user equipment provided in the embodiments of the present invention can monitor more HS-SCCH sub-frames in the paging timeslot within a DRX period than the user equipment in the prior art. Therefore, when the NodeB assigns the HS-SCCH to the user equipment provided in the embodiments of the present invention, the NodeB can instruct, by setting the PI of the PICH, the user equipment whether more HS-SCCHs needs to be monitored. For example, if reading first 288 bits of the PICH instructs the user equipment not to read the HS-SCCH (the PI corresponding to the UE is 0), the user equipment does not need to read the last 12 bits of the PICH; and if reading first 288 bits of the PICH instructs the user equipment to read the HS-SCCH (the PI corresponding to the UE is 1), the UE needs to continuously read one bit or two bits after the 288 bits, for example, the 289th bit is 1, and needs to monitor five more HS-SCCH sub-frames when reading HS-SCCHs subsequently.
Manner B: The RNC sends a system broadcast message carrying a first parameter to the user equipment, where the first parameter is used to instruct the user equipment to continuously detect the specific number of added HS-SCCH sub-frames if the user equipment fails to detect an HS-SCCH carrying the H-RNTI of the user equipment after detecting the specified number of HS-SCCH sub-frames in the paging timeslot within a DRX period.
   For example, the RNC adds a configurable parameter n into the system broadcast message, for example, if n is set to 10, it indicates that the user equipment is instructed to monitor ten HS-SCCH sub-frames in a paging timeslot within a DRX period, that is, after detecting HS-SCCHs in five sub-frames in the paging timeslot within a DRX period, if failing to detect an HS-SCCH carrying the H-RNTI of the user equipment, the user equipment continuously detects HS-SCCHs in another five sub-frames.
Manner C: The RNC sends a radio resource control (RRC) message carrying a second parameter to the user equipment, where the second parameter is used to instruct the user equipment to continuously detect the specific number of added HS-SCCH sub-frames if the user equipment fails to detect an HS-SCCH carrying the H-RNTI of the user equipment after detecting the specified number of HS-SCCH sub-frames in the paging timeslot within a DRX period.

For example, the RNC adds a configurable parameter n into the RRC message, for example, if n is set to 10, it indicates that the user equipment is instructed to monitor ten HS-SCCHs in the paging timeslot within a DRX period, that is, after detecting HS-SCCHs in five sub-frames in the paging timeslot within a DRX period, if failing to detect an HS-SCCH carrying the H-RNTI of the user equipment, the user equipment continuously detects HS-SCCHs in another five sub-frames.

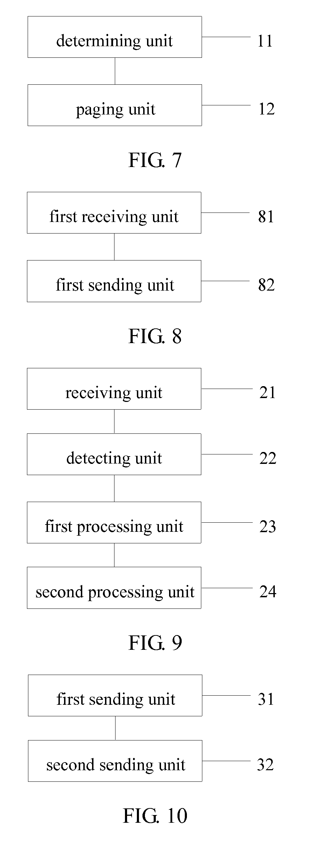

An embodiment illustrated in FIG. 7 provides a paging device, where the paging device may be an RNC. The paging device may instruct a NodeB to send data to the user equipment via an HS-PDSCH, where the user equipment is in a Cell_PCH state and has a dedicated H-RNTI. In specific applications, as shown in FIG. 7, the paging device includes a determining unit 11 and a paging unit 12.

The determining unit 11 is configured to determine whether a number of HS-SCCH resources demanded by a user equipment in a current cell is greater than a preset threshold.

The paging unit 12 is configured to: when a number of HS-SCCH resources demanded by the user equipment is greater than the preset threshold, instructs a NodeB to send data to a user equipment via an HS-PDSCH, where the user equipment is in a Cell_PCH state and has a dedicated H-RNTI.

When the user equipment is in the Cell_PCH state and has the dedicated H-RNTI, if a number of HS-SCCH resources demanded by user equipments in the current cell is greater than the preset threshold, the paging device provided in the embodiment of the present invention instructs the NodeB not to assign an HS-SCCH to the user equipment having the H-RNTI, but to send data to the user equipment directly via the HS-PDSCH. Compared with the prior art where an RNC sends a PAGING TYPE 2 message to a NodeB to trigger the NodeB to assign an HS-SCCH and a corresponding HS-PDSCH to a user equipment having an H-RNTI, the number of HS-SCCHs assigned to the user equipment having the H-RNTI can be reduced, thereby reducing congestion of HS-SCCH resources.

Furthermore, optionally, if the RNC sends at least two data packets to the user equipment in the same SFN, to avoid that after receiving a first data packet, the user equipment fails to receive subsequent data packet(s) sent by using an HS-SCCH less operation manner due to the switch from a Cell_PCH state to a Cell_FACH state, the paging device may further include a first processing unit and a receiving unit (not marked in the figure).

The first processing unit is configured to send, according to a first data structure, a data packet of at least two data packets to the user equipment directly via the HS-PDSCH.

The receiving unit is configured to receive a measurement report from the user equipment to confirm that a state of the user equipment is switched from the Cell_PCH state to the Cell_FACH state.

The first processing unit is further configured to instruct the NodeB to assign an HS-SCCH and a corresponding HS-PDSCH to the user equipment after the first receiving unit receives the measurement report, and send subsequent data packet(s) of the at least two data packets via the HS-PDSCH corresponding to the HS-SCCH.

Furthermore, optionally, if the RNC sends at least two data packets to the user equipment in the same SFN, to avoid that after receiving a first data packet, the user equipment fails to receive subsequent data packet(s) sent by using an HS-SCCH less operation manner due to the switch from a Cell_PCH state to a Cell_FACH state, the paging device may further include a second processing unit (not marked in the figure).

The second processing unit is configured to instruct the NodeB to receive at least two data packets and an H-RNTI of a user equipment to which the at least two data packets belong from the RNC, in a first SFN, send a data packet of the at least two data packets to the user equipment corresponding to the H-RNTI directly via the HS-PDSCH, cache rest data packets of the at least two data packets, in a second SFN, assign an HS-SCCH and a corresponding HS-PDSCH to the user equipment, and send subsequent data packet(s) of the at least two data packets via the HS-PDSCH corresponding to the HS-SCCH.

For example, when the second processing unit instructs the NodeB to receive the at least two data packets and the H-RNTI of the user equipment to which the at least two data packets belong from the RNC, a possible implementation process is as follows: Firstly, a first data packet of the at least two data packets may be sent, and then the H-RNTI is sent while the subsequent data packet(s) of the at least two data packets are sent.

In addition, the paging device further includes at least one of the following sending units (not marked in the figure):
a first sending unit, configured to instruct the NodeB to set a specific field of a PICH frame to a specified value, send the PICH to the user equipment, where the specified value is used to instruct the user equipment to blindly detect HS-PDSCH if a specified number of HS-SCCHs do not carry a dedicated H-RNTI of the user equipment;
a second sending unit, configured to send a system broadcast message carrying a first parameter to the user equipment, where the first parameter is used to instruct the user equipment to blindly detect HS-PDSCH if a specified number of HS-SCCHs do not carry a dedicated H-RNTI of the user equipment;
a third sending unit, configured to send a radio resource control (RRC) message carrying a second parameter to the user equipment, where the second parameter is used to instruct the user equipment to blindly detect HS-PDSCH if a specified number of HS-SCCHs do not carry a dedicated H-RNTI of the user equipment.

Accordingly, an embodiment illustrated in FIG. 8 provides a NodeB. The NodeB corresponds to the paging device illustrated in FIG. 7 and includes a first receiving unit 81 and a first sending unit 82.

The first receiving unit 81 is configured to receive a first instruction message from an RNC.

The first sending unit 82 is configured to send, according to the first instruction message, data to the user equipment via a high speed physical downlink shared channel HS-PDSCH, where the user equipment is in a Cell_PCH state and has a dedicated radio network temporary identity (H-RNTI).

Furthermore, the NodeB may further include a second receiving unit and a second sending unit (not marked in the figure).

The second receiving unit is configured to receive at least two data packets and an H-RNTI of a user equipment to which the at least two data packets belong from the RNC.

The second sending unit is configured to: in a first SFN, send, according to a specific instruction from the RNC, a first data packet of the at least two data packets to the user equipment corresponding to the H-RNTI via the HS-PDSCH; cache subsequent data packet(s) of the at least two data packets and the H-RNTI; in a next SFN, assign an HS-SCCH and a corresponding HS-PDSCH to the user equipment; and send the subsequent data packet(s) of the at least two data packets via the HS-PDSCH corresponding to the HS-SCCH.

In addition, the NodeB may further include: a processing unit (not marked in the figure), configured to set a specific field of a PICH frame to a specified value according to a second instruction received from the RNC, and send the PICCH to the user equipment, where the specified value is used to instruct the user equipment to blindly detect HS-PDSCH if a specified number of HS-SCCHs do not carry a dedicated H-RNTI of the user equipment.

Accordingly, an embodiment illustrated in FIG. 9 provides a user equipment. The user equipment corresponds to the paging device illustrated in FIG. 7 and has a dedicated H-RNTI, including: a receiving unit 21, a detecting unit 22, a first processing unit 23, and a second processing unit 24.

The receiving unit 21 is configured to receive a PICH carrying a paging instruction from an RNC.

The detecting unit 22 is configured to detect, according to the paging instruction, whether a specified number of HS-SCCHs related to the PICH carry its own H-RNTI in a paging timeslot within a DRX period.

The first processing unit 23 is configured to blindly detect HS-PDSCH if the detecting unit 22 detects that the specified number of HS-SCCHs do not carry a dedicated H-RNTI of the user equipment.

If the detecting unit 22 detects that an HS-SCCH sub-frame in subsequent HS-SCCH sub-frame(s) of the specified number of HS-SCCH sub-frames carries the dedicated H-RNTI, the second processing unit 24 is configured to receive data from an HS-PDSCH corresponding to the HS-SCCH carrying a dedicated H-RNTI of the user equipment.

The paging device illustrated in FIG. 7 triggers the NodeB not to assign an HS-SCCH to the user equipment having the H-RNTI, but to send data to user equipments directly via the HS-PDSCH, which can reduce the number of HS-SCCHs assigned to the user equipment having the H-RNTI and reduce congestion of HS-SCCH resources. Accordingly, the user equipment illustrated in FIG. 9 can monitor, by blind detection, all HS-PDSCHs to obtain data when failing to detect the H-RNTI in the HS-SCCHs, so as to obtain data sent directly via an HS-PDSCH when the RNC does not assign the HS-SCCH.

An embodiment illustrated in FIG. 10 provides a paging device, where the paging device is specifically an RNC and includes a first sending unit 31 and a second sending unit 32.

The first sending unit 31 is configured to send an H-RNTI and an extension identity of a user equipment to a NodeB.

The second sending unit 32 is configured to send instruction information to the user equipment to instruct the user equipment having the extension identity to continuously detect a specific number of added HS-SCCH sub-frames if the user equipment fails to detect an HS-SCCH carrying the H-RNTI of the user equipment after detecting a specified number of HS-SCCH sub-frames in a paging timeslot within a DRX period.

Specifically, the second sending unit 32 includes at least one of the following modules (not marked in the figure).

A first sending module is configured to: set a specific field of a PICH frame to a specified value, and send the PICH to the user equipment, where the specific field is used to instruct the user equipment to continuously detect the specific number of added HS-SCCHs if the user equipment fails to detect an HS-SCCH carrying the H-RNTI of the user equipment after detecting the specified number of HS-SCCHs in the paging timeslot within a DRX period; or,

A second sending module is configured to: send a system broadcast message carrying a first parameter to the user equipment, where the first parameter is used to instruct the user equipment to continuously detect the specific number of added HS-SCCHs if the user equipment fails to detect an HS-SCCH carrying the H-RNTI of the user equipment after detecting the specified number of HS-SCCHs in the paging timeslot within a DRX period.

A third sending module is configured to: send a radio resource control (RRC) message carrying a second parameter to the user equipment, where the second parameter is used to instruct the user equipment to continuously detect the specific number of added HS-SCCHs if the user equipment fails to detect an HS-SCCH carrying the H-RNTI of the user equipment after detecting the specified number of HS-SCCHs in the paging timeslot within a DRX period.

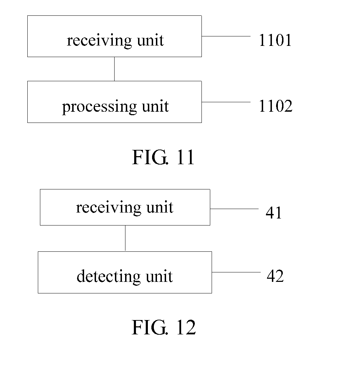

An embodiment illustrated in FIG. 11 provides a NodeB, where the NodeB corresponds to the paging device illustrated in FIG. 10 and includes a receiving unit 1101 and a processing unit 1102.

The receiving unit 1101 is configured to receive an H-RNTI and an extension identity of a user equipment that are sent by an RNC, assign an HS-SCCH and a corresponding HS-PDSCH to the user equipment, and send data to the user equipment via the HS-PDSCH corresponding to the HS-SCCH, where the HS-SCCH carries the H-RNTI of the user equipment.

The processing unit is configured to set a specific field of a PICH frame to a specified value according to an instruction of the RNC, where the specified value indicates that a specific number of added HS-SCCH sub-frames are continuously detected, and send the PICH to the user equipment.

An embodiment illustrated in FIG. 12 provides a user equipment, where the user equipment corresponds to the paging device illustrated in FIG. 10 and has a dedicated H-RNTI, including a receiving unit 41 and a detecting unit 42.

The receiving unit 41 is configured to receive an instruction message from an RNC.

The detecting unit 42 is configured to continuously detect, according to the instruction message, a specific number of added HS-SCCHs if detecting no HS-SCCH carrying its own H-RNTI after detecting a specified number of HS-SCCHs in a paging timeslot within a DRX period.

In the foregoing paging device illustrated in FIG. 10 and the user equipment illustrated in FIG. 12, an RNC sends a PAGING TYPE 2 message to a NodeB, and sends an H-RNTI and an extension identity of a user equipment to the NodeB; the NodeB sends an instruction message to the user equipment according to the extension identity to instruct the user equipment to continuously detect a specific number of added HS-SCCHs if the user equipment fails to detect an HS-SCCH carrying the H-RNTI of the user equipment after detecting a specified number of HS-SCCHs in a paging timeslot within a DRX period. However, after a user equipment in the prior art finishes detecting a specified number of HS-SCCHs in a paging timeslot within a DRX period, if the user equipment fails to detect an HS-SCCH carrying an H-RNTI of the user equipment, the user equipment enters a dormant state and fails to receive data in a paging timeslot with a current DRX period. Compared with the prior art, the embodiment of the present invention can increase the probability of a user equipment in receiving data in a paging timeslot within a DRX period, reduce the time of occupying HS-SCCHs by the user equipment, and improve the utilization of HS-SCCHs, thereby achieving the obj ective of reducing congestion of HS-SCCH resources.

Embodiments of the present invention are mainly applied in a process where a network assigns HS-SCCH resources to a user equipment, and are applicable to WCDMA systems and TD systems, which can reduce congestion of HS-SCCH resources.

The foregoing descriptions are merely specific embodiments of the present invention, but are not intended to limit the protection scope of the present invention. Any variation or replacement readily figured out by persons skilled in the art within the technical scope disclosed in the present invention shall all fall within the protection scope of the present invention. Therefore, the protection scope of the present invention shall be subject to the protection scope of the claims.

## Claims

1. A method for paging a user equipment in a Cell_PCH state, **characterized in** comprising:
instructing, by a radio network controller, a base station to send data to a user equipment via a high speed physical downlink shared channel (HS-PDSCH), wherein the user equipment is in a Cell_PCH state and has a dedicated radio network temporary identity (H-RNTI).

2. The method for paging a user equipment in the Cell_PCH state according to claim 1, **characterized in that** the method further comprises:
determining, by the radio network controller, whether a number of high speed shared control channel (HS-SCCH) resources demanded by the user equipment in a current cell is greater than a preset threshold; and
wherein the instructing, by the radio network controller, the base station to send the data to the user equipment via the high speed physical downlink shared channel (HS-PDSCH) comprises: instructing, by the radio network controller, the base station to send the data to the user equipment via the high speed physical downlink shared channel (HS-PDSCH) if the number of the HS-SCCH resources demanded by the user equipment is greater than the preset threshold.

3. The method for paging the user equipment in the Cell_PCH state according to claim 1 or 2, **characterized in that** the method further comprises:
instructing, by the radio network controller, the base station to send a first data packet of at least two data packets in a same system frame number (SFN) via the HS-PDSCH;
instructing, by the radio network controller, the base station to assign a high speed shared control channel (HS-SCCH) and a corresponding HS-PDSCH to the user equipment after receiving a measurement report from the user equipment; and
sending, by the radio network controller, subsequent data packet(s) of the at least two data packets via the HS-PDSCH corresponding to the HS-SCCH.

4. The method for paging the user equipment in the Cell_PCH state according to claim 1 or 2, **characterized in that** the method further comprises:
instructing, by the radio network controller, the base station to receive at least two data packets and a radio network temporary identity (H-RNTI) of the user equipment to which the at least two data packets belong from the radio network controller;
sending a first data packet of the at least two data packets in a first system frame number (SFN) to the user equipment corresponding to the H-RNTI via the HS-PDSCH;
caching subsequent data packet(s) of the at least two data packets and the H-RNTI;
assigning a high speed shared control channel (HS-SCCH) and a corresponding HS-PDSCH in a next SFN to the user equipment; and
sending the subsequent data packet(s) of the at least two data packets via the HS-PDSCH corresponding to the HS-SCCH.

5. The method for paging the user equipment in the Cell_PCH state according to claim 1 or 2, **characterized in that** the method further comprises:
instructing, by the radio network controller, the base station to set a specific field of a paging indicator channel (PICH) frame to a specified value; sending the PICH to the user equipment, wherein the specified value is used to instruct the user equipment to blindly detect the HS-PDSCH if a specified number of HS-SCCH do not carry the dedicated H-RNTI of the user equipment; or
sending, by the radio network controller, a system broadcast message carrying a first parameter to the user equipment, wherein the first parameter is used to instruct the user equipment to blindly detect the HS-PDSCH if a specified number of HS-SCCHs do not carry the dedicated H-RNTI of the user equipment; or
sending, by the radio network controller, a radio resource control (RRC) message carrying a second parameter to the user equipment, wherein the second parameter is used to instruct the user equipment to blindly detect the HS-PDSCH if a specified number of HS-SCCHs do not carry the dedicated H-RNTI of the user equipment.

6. A method for paging a user equipment in a Cell_PCH state, **characterized in** comprising:
receiving a first instruction message from a radio network controller; and
sending data to a user equipment via a high speed physical downlink shared channel (HS-PDSCH) according to the first instruction message, wherein the user equipment is in a Cell_PCH state and has a dedicated radio network temporary identity (H-RNTI).

7. The method for paging the user equipment in the Cell_PCH state according to claim 6, **characterized in that** the method further comprises:
receiving at least two data packets and an H-RNTI of the user equipment to which the at least two data packets belong from the radio network controller;
sending a first data packet of the at least two data packets in a first system frame number (SFN) to the user equipment corresponding to the H-RNTI via the HS-PDSCH according to a specific instruction from the radio network controller;
caching subsequent data packet(s) of the at least two data packets and the H-RNTI;
assigning a high speed shared control channel (HS-SCCH) and a corresponding HS-PDSCH in a next SFN to the user equipment; and
sending the subsequent data packet(s) of the at least two data packets via the HS-PDSCH corresponding to the HS-SCCH.

8. The method for paging the user equipment in the Cell_PCH state according to claim 6, **characterized in that** the method further comprises:
setting a specific field of a paging indicator channel (PICH) frame to a specified value according to a second instruction received from the radio network controller; and
sending the PICH to the user equipment, wherein the specified value is used to instruct the user equipment to blindly detect HS-PDSCH if a specified number of HS-SCCHs do not carry a dedicated H-RNTI of the user equipment.

9. A method for paging the user equipment in the Cell_PCH state, **characterized in that** the user equipment in the Cell_PCH state has a dedicated radio network temporary identity (H-RNTI), the method further comprises:
receiving, by a user equipment, a paging indicator channel (PICH) carrying a paging instruction from a radio network controller;
detecting, by the user equipment, whether a specified number of high speed shared control channel (HS-SCCH) related to the PICH carries the dedicated H-RNTI of the user equipment; and
blindly detecting, by the user equipment, a high speed physical downlink shared channel (HS-PDSCH) if detecting that the specified number of HS-SCCH sub-frames do not carry the dedicated H-RNTI of the user equipment; or, receiving, by the user equipment, data from a high speed physical downlink shared channel (HS-PDSCH) corresponding to the HS-SCCH sub-frame carrying the dedicated H-RNTI if detecting that an HS-SCCH sub-frame in subsequent HS-SCCH sub-frame(s) of the specified number of the HS-SCCH sub-frames carries the dedicated H-RNTI.

10. A method for paging a user equipment in a Cell_PCH state, **characterized in** comprising:
sending, by a radio network controller, a radio network temporary identity (H-RNTI) and an extension identity of a user equipment to a base station; and
sending, by the radio network controller, instruction information to the user equipment to instruct the user equipment having the extension identity to continuously detect a specific number of added high speed shared control channel (HS-SCCH) sub-frames if the user equipment fails to detect an HS-SCCH that carries the H-RNTI of the user equipment after detecting a specified number of HS-SCCH sub-frames in a paging timeslot within a discontinuous reception (DRX) period.

11. The method for paging the user equipment in the Cell_PCH state according to claim 10, **characterized in that** the sending, by the radio network controller, the instruction information to the user equipment comprises:
instructing, by the radio network controller, the base station to set a specific field of a paging indicator channel (PICH) frame to a specified value, wherein the specified value indicates that the specific number of added HS-SCCH sub-frames are continuously detected, and sending the PICH to the user equipment; or,
sending, by the radio network controller, a system broadcast message carrying a parameter indicating that the specific number of added HS-SCCH sub-frames are continuously detected to the user equipment; or,
sending, by the radio network controller, a radio resource control (RRC) message that carries a parameter indicating that the specific number of added HS-SCCH sub-frames are continuously detected to the user equipment.

12. A method for paging a user equipment in a Cell_PCH state, **characterized in** comprising:
receiving a radio network temporary identity (H-RNTI) and an extension identity of a user equipment from a radio network controller; and
assigning a high speed shared control channel (HS-SCCH) and a corresponding high speed physical downlink shared channel (HS-PDSCH) to the user equipment;
sending data to the user equipment via the HS-PDSCH corresponding to the HS-SCCH, wherein the HS-SCCH carries the H-RNTI of the user equipment; and
setting a specific field of a paging indicator channel (PICH) frame to a specified value according to an instruction of the radio network controller, wherein the specified value indicates that a specific number of added HS-SCCH sub-frames are continuously detected, and sending the PICH to the user equipment.

13. A method for paging a user equipment in a Cell_PCH state, **characterized in** comprising:
receiving, by a user equipment, an instruction message from the radio network controller; and
continuously detecting, by the user equipment, a specific number of added HS-SCCH if failing to detect a high speed shared control channel (HS-SCCH) carrying a dedicated radio network temporary identity (H-RNTI) of the user equipment after detecting a specified number of HS-SCCHs in a paging timeslot within a discontinuous reception (DRX) period according to the instruction message.

14. A paging device, **characterized in** comprising:
a paging unit, configured to instruct a base station to send data to a user equipment via a high speed physical downlink shared channel (HS-PDSCH), wherein the user equipment is in a Cell_PCH state and has a dedicated radio network temporary identity (H-RNTI).

15. The paging device according to claim 14, **characterized in** further comprising:
a determining unit, configured to determine whether a number of high speed shared control channel (HS-SCCH) resources demanded by the user equipment in a current cell is greater than a preset threshold;
wherein the paging unit is configured to: instruct the base station to send data to the user equipment via the HS-PDSCH if the number of the HS-SCCH resources demanded by the user equipment is greater than the preset threshold, wherein the user equipment is in a Cell_PCH state and has the dedicated H-RNTI.

16. The paging device according to claim 14 or 15, **characterized in** further comprising:
a first processing unit, configured to send a first data packet of at least two data packets in a same system frame number (SFN) to the user equipment directly via the HS-PDSCH according to a first data structure, wherein:
the first processing unit is further configured to instruct the base station to assign a high speed shared control channel (HS-SCCH) and a corresponding HS-PDSCH to the user equipment after receiving a measurement report from the user equipment and send subsequent data packet(s) of the at least two data packets via the HS-PDSCH corresponding to the HS-SCCH.

17. The paging device according to claim 14 or 15, **characterized in** further comprising:
a second processing unit, configured to instruct the base station to receive at least two data packets and an H-RNTI of a user equipment to which the at least two data packets belong from a radio network controller, send a data packet of the at least two data packets to the user equipment corresponding to the H-RNTI directly via the HS-PDSCH in a first system frame number (SFN), cache subsequent data packet(s) of the at least two data packets, assign a high speed shared control channel (HS-SCCH) and a corresponding HS-PDSCH to the user equipment in a next SFN, and send the subsequent data packet(s) of the at least two data packets via the HS-PDSCH corresponding to the HS-SCCH.

18. The paging device according to claim 14 or 15, **characterized in** further comprising at least one of the following sending units:
a first sending unit, configured to instruct the base station to set a specific field of a paging indicator channel (PICH) frame to a specified value; send the PICH to the user equipment, wherein the specified value is used to instruct the user equipment to blindly detect HS-PDSCH if a specified number of HS-SCCHs do not carry the dedicated H-RNTI of the user equipment;
a second sending unit, configured to send a system broadcast message carrying a first parameter to the user equipment, wherein the first parameter is used to instruct the user equipment to blindly detect HS-PDSCH if a specified number of HS-SCCHs do not carry the dedicated H-RNTI of the user equipment;
a third sending unit, configured to send a radio resource control (RRC) message carrying a second parameter to the user equipment, wherein the second parameter is used to instruct the user equipment to blindly detect HS-PDSCH if a specified number of HS-SCCHs do not carry the dedicated H-RNTI of the user equipment.

19. A base station, **characterized in** comprising:
a first receiving unit, configured to receive a first instruction message from a radio network controller; and
a first sending unit, configured to send data to the user equipment via a high speed physical downlink shared channel (HS-PDSCH) according to the first instruction message, wherein the user equipment is in a Cell_PCH state and has a dedicated radio network temporary identity (H-RNTI).

20. The base station according to claim 19, **characterized in** further comprising:
a second receiving unit, configured to receive at least two data packets and an H-RNTI of a user equipment to which the at least two data packets belong from the radio network controller; and
a second sending unit, configured to: send a first data packet of the at least two data packets to the user equipment corresponding to the H-RNTI in a first system frame number (SFN) via the HS-PDSCH according to a specific instruction from the radio network controller, cache subsequent data packet(s) of the at least two data packets and the H-RNTI, assign a high speed shared control channel (HS-SCCH) and a corresponding HS-PDSCH to the user equipment in a next SFN; and send the subsequent data packet(s) of the at least two data packets via the HS-PDSCH corresponding to the HS-SCCH.

21. The base station according to claim 19, **characterized in** further comprising:
a processing unit, configured to set a specific field of a paging indicator channel (PICH) frame to a specified value according to a second instruction received from the radio network controller, send the PICH to the user equipment, wherein the specified value is used to instruct the user equipment to blindly detect HS-PDSCH if a specified number of HS-SCCHs do not carry the dedicated H-RNTI of the user equipment.

22. A user equipment, **characterized in**, corresponding to the paging device in claim 10 and having a dedicated radio network temporary identity (H-RNTI), comprising:
a receiving unit, configured to receive a paging indicator channel (PICH) carrying a paging instruction from a radio network controller;
a detecting unit, configured to detect whether a specified number of high speed shared control channel (HS-SCCH) sub-frames related to the PICH carry a dedicated H-RNTI of the user equipment in a paging timeslot within a discontinuous reception (DRX) period according to the paging instruction;
a first processing unit, configured to blindly detect high speed physical downlink shared channel (HS-PDSCH) if the detecting unit detects that the specified number of the HS-SCCH sub-frames do not carry the dedicated H-RNTI of the user equipment; and
a second processing unit, configured to receive data from an HS-PDSCH corresponding to the HS-SCCH sub-frame carrying the dedicated H-RNTI if the detecting unit detects that an HS-SCCH sub-frame in subsequent HS-SCCH sub-frame(s) of the specified number of HS-SCCH sub-frames carries the dedicated H-RNTI.

23. A paging device, **characterized in** comprising:
a first sending unit, configured to send a radio network temporary identity (H-RNTI) and an extension identity of a user equipment to a base station; and
a second sending unit, configured to send instruction information to the user equipment to instruct the user equipment having the extension identity to continuously detect a specific number of added high speed shared control channel (HS-SCCH) sub-frames if the user equipment fails to detect an HS-SCCH carrying the H-RNTI of the user equipment after detecting the specified number of the HS-SCCH sub-frames in a paging timeslot within a discontinuous reception (DRX) period.

24. The paging device according to claim 23, **characterized in that** the second sending unit comprises at least one of the following modules:
a first sending module, configured to set a specific field of a paging indicator channel (PICH) frame to a specified value, and send the PICH to the user equipment, wherein the specific field is used to instruct the user equipment to continuously detect the specific number of added HS-SCCH sub-frames if the user equipment fails to detect an HS-SCCH carrying the H-RNTI of the user equipment after detecting the specified number of the HS-SCCH sub-frames in the paging timeslot within the DRX period;
a second sending module, configured to: send a system broadcast message carrying a first parameter to the user equipment, wherein the first parameter is used to instruct the user equipment to continuously detect the specific number of added HS-SCCH sub-frames if the user equipment fails to detect an HS-SCCH carrying the H-RNTI of the user equipment after detecting the specified number of the HS-SCCH sub-frames in the paging timeslot within the DRX period; and
a third sending module, configured to: send a radio resource control (RRC) message carrying a second parameter to the user equipment, wherein the second parameter is used to instruct the user equipment to continuously detect the specific number of added HS-SCCH sub-frames if the user equipment fails to detect an HS-SCCH carrying the H-RNTI of the user equipment after detecting the specified number of the HS-SCCH sub-frames in the paging timeslot within the DRX period.

25. A base station, **characterized in** comprising:
a receiving unit, configured to: receive a radio network temporary identity (H-RNTI) and an extension identity of a user equipment from a radio network controller, assign a high speed shared control channel (HS-SCCH) and a corresponding high speed physical downlink shared channel (HS-PDSCH) to the user equipment, and send data to the user equipment via the HS-PDSCH corresponding to the HS-SCCH, wherein the HS-SCCH carries the H-RNTI of the user equipment; and
a processing unit, configured to set a specific field of a paging indicator channel (PICH) frame to a specified value according to an instruction of the radio network controller, wherein the specified value indicates that a specific number of added HS-SCCH sub-frames are continuously detected, and send the PICH to the user equipment.

26. A user equipment, **characterized in**, corresponding to the paging device in claim 16 and having a dedicated radio network temporary identity (H-RNTI), comprising:
a receiving unit, configured to receive an instruction message from a radio network controller; and
a detecting unit, configured to continuously detect a specific number of added high speed shared control channel (HS-SCCH) if detecting no HS-SCCH carrying its own H-RNTI after detecting a specified number of HS-SCCH are detected according to the instruction message in a paging timeslot within a discontinuous reception (DRX) period.
